# EUROPÄISCHE PATENTSCHRIFT

(11) **EP 2 641 673 B1**
(45) Veröffentlichungstag und Bekanntmachung des Hinweises auf die Patenterteilung: **21.10.2020**
(21) Anmeldenummer: 13158919.4
(22) Anmeldetag: 13.03.2013
(51) Int. Cl.: B21K 17/00, B21J 5/12, B21K 5/02, B60G 21/055, B21J 5/08, B21J 9/06, B21K 5/04

(54) **Verfahren und Vorrichtung zur Herstellung eines Verbindungsabschnitts als Teil eines Werkzeugs**
Method and apparatus for producing a connecting section as part of a tool
Procédé et dispositif de fabrication d'une section de raccordement comme élément d'un outil

(30) Priorität: 22.03.2012 DE 102012204609
(43) Veröffentlichungstag der Anmeldung: 25.09.2013
(73) Patentinhaber: Mac Panther GmbH, 28199 Bremen (DE)
(72) Erfinder: Kleine Michael, 28832 Achim (DE); Sandikci Dursun-Ali, 28307 Bremen (DE)
(74) Vertreter: Eisenführ Speiser

(56) Entgegenhaltungen:
- EP-B1- 2 181 783
- DE-A1-102010 018 791
- GB-A- 2 074 484
- JP-A- H11 290 984

## Beschreibung

Die Erfindung betrifft ein Verfahren zur Herstellung eines mit einer Endfläche versehenen Verbindungabschnitts als Teil eines Werkzeuges, insbesondere eines axialbeweglich in der Werkzeugaufnahme eines Bohrhammers befestigten Bohrers, oder auch als Teil einer Verbindungsstange, wobei der Verbindungsabschnitt mindestens zwei Längsnuten oder Längsflächen aufweist, von denen mindestens eine zur Endfläche des Verbindungsabschnitts hin zumindest teilweise geschlossen ist. Die Erfindung ermöglicht es, ein Halbwerkzeug, einen Bohrer oder eine Stange mit einem Verbindungsabschnitt und/oder einem vorderen Arbeitsabschnitt herzustellen, oder ferner eine Stange zum Aufnehmen von axialen Zug- und Druckkräften und von Drehmomenten. Die Erfindung betrifft ferner eine Vorrichtung zur Fertigung eines Verbindungsabschnitts als Teil eines Werkzeugs, insbesondere eines axialbeweglich in der Werkzeugaufnahme eines Bohrhammers befestigten Bohrers. Die Erfindung betrifft auch eine Kombination von Matrizen zur Herstellung von Verbindungsabschnitten für Halbwerkzeuge, Bohrer und Stangen mit mindestens zwei Längsnuten oder Längsflächen, von denen mindestens eine zur Endfläche des Verbindungsabschnitts hin zumindest teilweise geschlossen ist.

Verfahren, Vorrichtungen, Halbwerkzeuge, Bohrer und Stangen der eingangs genannten Art sind grundsätzlich bekannt, siehe z.B. die gattungsgemäße DE 10 2010 018791 A1. Aufgabe der Erfindung ist daher, ein verbessertes Verfahren sowie eine verbesserte Vorrichtung zur Herstellung von Verbindungsabschnitten für Stangen und Bohrer bereitzustellen.

Diese Aufgabe wird erfindungsgemäß durch ein Verfahren gemäß Anspruch 1 gelöst.

Die Erfindung umfasst die Erkenntnis, dass Bohrer und Verbindungsstangen üblicherweise auf spanenden Werkzeugmaschinen gefertigt werden, was zu einem erhöhten Materialverbrauch aufgrund der anfallenden Späne führt und zudem verhältnismäßig lange Fertigungszeiten benötigt. Deshalb hat es immer wieder Überlegungen gegeben, derartige Verbindungsabschnitte mittels Umformung herzustellen. In der EP 2 181 783 B1 wird ein Verfahren zur Herstellung einer Stange sowie eine Stange beschrieben, welche beispielsweise als Pendelstütze für ein Fahrwerk im Automobilbau eingesetzt werden kann. Es hat sich dabei jedoch gezeigt, dass die in der EP 2 181 783 B1 vorgeschlagene Stange nicht für höhere axiale Zugkräfte geeignet ist, da der erzielte Hinterschnitt bei wärmeren Temperaturen einem umspritzten Kunststoffteil nicht ausreichend Widerstand entgegensetzt. Da der Übergang vom dünneren zylindrischen Teil zum gestauchten dickeren Abschnitt zudem kontinuierlich verläuft, stellt dieser Übergang keinen klar begrenzenden Stopp bzw. Anschlag bereit. Lediglich die in Figur 8 der EP 2 181 783 B1 dargestellte Lösung hat sich in der Praxis auch für höhere Belastungen bewehrt. Dabei muss der Hinterschnitt in einem separaten Arbeitsgang mittels Walzen erzeugt werden, was zu erhöhten Kosten führt. Zur Fertigung von Verbindungsabschnitten bei Hammerbohrern (dort meist als Einsteckende bezeichnet) - insbesondere sogenannten SDS-plus-Bohrern - sind Lösungen zur Fertigung mittels Umformen bekannt. Eine Fertigung dieser Art ist in der DE 84 33 275 U1 beschrieben. Dabei werden die Nuten durch Fließpressen zur Endfläche offen eingebracht und nachträglich durch Stauchen verschlossen. In der Praxis hat sich dieser Vorschlag nicht realisieren lassen, da beim Schließen der Nuten durch Stauchen diese sich gleichfalls verformen und somit ihre Funktion nicht erfüllen können. In der DE 199 15 303 A1 wird beschrieben, das Einsteckende mit den offenen und geschlossenen Nuten durch Fließpressen oder Schmiedeverfahren herzustellen. Auch hier findet sich kein Hinweis, wie das Problem der Verformung der Nuten bei dem jeweils notwendigen zweiten Umformvorgang gelöst wird. Nach der EP 2 361 702 A1 werden zur Lösung dieses Problems Füllkörper in die Nuten eingeführt, um beim anschließenden Stauchen die Form der Nuten zu erhalten. Problematisch ist hierbei, dass für das Schließen der Nuten mittels Stauchen erhebliche axiale Kräfte benötigt werden. Im Falle, dass ein SDS-plus-Einsteckende von 10mm Durchmesser auf seiner Arbeitsseite (in Bohrrichtung gesehen) für einen Bohrer von etwa 5mm Bohrdurchmesser ausgelegt ist, ergibt sich das Problem, dass beim Stauchen der Endfläche der Abschnitt mit 5mm Bohrdurchmesser gleichfalls mit gestaucht werden kann, was beim Auswerfen des Bohrerrohlings oft zu Auswerfernadelbrüchen führt. Daher wurde in der EP 2 458 131 A2 vorgeschlagen, das Schließen der Nut als Warm- oder Halbwarmumformung vorzunehmen. Hierdurch werden die benötigten Axialkräfte stark reduziert und das geschilderte Problem vermieden. Allerdings führt das Erwärmen zu einem zusätzlichen kostenintensiven Arbeitsschritt. Das Kaltaufstauchen hat auch noch einen weiteren schwerwiegenden Nachteil: durch das vorherige Einformen der Längsnuten ist die Endfläche 121 vor dem Stauchen sehr stark gewellt und weist teilweise sogar Grat auf.

Beim anschließenden Stauchen verformt sich diese Endfläche derart, dass es in diesem Abschnitt zu Materialfaltungen kommt. In der z. B. durch Axialschläge des Bohrhammers höchstbelasteten Endzone des Bohrers können derartige Materialfehler zu Brüchen führen, wobei die Bruchteile oft zu Schäden des Bohrhammers führen. Weiterhin hat sich gezeigt, dass das Einformen der Längsnuten und das Schließen der Endfläche mittels Stauchen aufgrund der mit jedem Arbeitsschritt durchzuführenden großen Umformarbeit die mögliche Produktionstaktzahl begrenzt.

Bei dem erfindungsgemäßen , im Anspruch 1 definierten Verfahren werden in dem Verbindungsabschnitt Längsnuten oder Längsflächen eingebracht, von denen eine erste Längsnut oder Längsfläche als Drehmitnahmenut wirken kann. Ein zweite Längsnut oder Längsfläche, die beispielsweise zum Ende des Verbindungsabschnitts hin geschlossen ist, kann zudem als Verriegelungsnut wirken.

Ein besonderer Vorteil des erfindungsgemäßen Verfahrens gegenüber bisher bekannten Verfahren zur Herstellung von Verbindungsabschnitten besteht darin, dass mindestens eine Längsnut oder Längsfläche, insbesondere die Verriegelungsnuten, in mindestens zwei Schritten hergestellt werden. Durch die Aufteilung der Fertigung der Verriegelungsnut auf zwei Schritte wird erreicht, dass jeder Schritt mit deutlich geringerer Kraft erfolgt und somit die Matrizenlebensdauer und gleichzeitig die Taktgeschwindigkeit beim Umformen deutlich erhöht werden kann. Auch besonders nachteilige Faltungen der Endfläche werden vermieden. Zugleich hat sich gezeigt, dass die Produktionsgeschwindigkeit gegenüber den vorstehend geschilderten Verfahren um etwa 30% erhöht sein kann, da die einzelnen Umformschritte deutlich kleiner sind.

Gemäß der Erfindung erfolgt das erste Formen als Einformen durch Fließpressen oder Verjüngen in einer Matrize, wobei mindestens eine der Längsnuten oder Längsflächen vorgeformt wird, und das zweite Formen als Weiterformen der mindestens einen vorgeformten Längsnut in einer Schließmatrize mit zumindest einem radial beweglichen Umformkörper. Das Einformen der zwei Längsnuten oder Längsflächen erfolgt erfindungsgemäß durch einen Umformungsschritt, beispielsweise durch Einpressen in einer Matrize oder in einem Gesenk. Der Begriff Matrize bzw. Gesenk ist im Rahmen der vorliegenden Erfindung insbesondere zu verstehen als Werkzeug zur umformenden Bearbeitung, welches die Negativform wenigstens eines Teils des Werkstücks aufweist. Somit werden die Längsnuten oder Längsflächen insbesondere nicht spanend erzeugt. Das Werkzeug kann beispielsweise ein Umformwerkzeug in Form einer mindestens zweiteiligen Hohlform aus warmfesten Werkzeugstahl sein. Die benötigte Geometrie des zu formenden Stücks wird beispielsweise in Form einer geteilten Gravur in die beiden Teile des Gesenkes eingebracht. Zunächst werden die Verriegelungsnuten durch Fließpressen oder Verjüngen vorgeformt und anschließend werden diese vorgeformten Nuten über einen Abschnitt mittels Umformkörpern weiter geformt, wobei sowohl die Nuttiefe und/oder die Nutbreite sich verändern. Das in diesem zweiten Schritt des Weiterformens verdrängte Material fließt in Freiräume der Matrize, beispielsweise in einen der Endfläche zugekehrten Bereich, welcher an die Verriegelungsnut anschließt. Durch das Nach- bzw. Weiterformen mittels Umformkörpern, die größere Tiefe und Breite der Nut in diesem Bereich und das zur Endfläche hin aufgeworfene aus der Verriegelungsnut verdrängte Material ergibt sich, dass Verriegelungskörper in der Verriegelungsnut nicht mehr in Richtung Endfläche entfernt werden können. Ein Stauchvorgang kann daher entfallen.

Erfindungsgemäß sind die vorgeformten Längsnuten oder -flächen derart dimensioniert, dass das beim Weiterformen mit dem zumindest einen Umformkörper verdrängte Material in einen bereits vorgeformten Freiraum verdrängt werden kann. Ohne diese vorgeformten Freiräume könnten die Matrizen überlastet werden. Außerdem kann durch die Freiräume die gewünschte Umformung gezielt gesteuert werden. Der Freiraum weist ein Volumen auf, welches annähernd gleich wie das beim Weiterformen zu verdrängende Volumen ist. Bei einem vollständigen Ausfüllen der Freiräume wird ein besonders präzises Umformergebnis erzielt.

Gemäß einer weiteren bevorzugten Ausführungsform wird der, bzw. werden die radial beweglichen Umformkörper in Aussparungen der Schließmatrize geführt. Durch eine Ausführung der Schließmatrize als Ringkörper mit Aussparungen für die Umformkörper ergibt sich ein besonders stabiler Matrizenverbund, der den Umformkräften standhält. Dadurch ist es für bestimmte Formen der Verriegelungsnut, z.B. für Formen, die mit weniger als 20% Umformung verbunden sind, und für bestimmte Werkstoffe, z.B. für Leichtmetalle und Werkstoffe mit Festigkeiten von weniger als 700 N/mm², möglich, dass auf die Vorformung verzichtet werden und die gesamte Umformung der Verriegelungsnut mit den radial beweglichen Umformkörpern durchgeführt werden kann.

Gemäß einer weiteren bevorzugten Ausführungsform weist die Schließmatrize eine dem Verbindungsabschnitt zugewandte, insbesondere nach innen gerichtete Kontur auf, welche korrespondierend zu einer weitergeformten Längsnut oder Längsfläche ausgebildet ist. Dadurch bleiben bei den weiteren Umformschritten die bereits fertigen Nuten in ihrer Form erhalten. Der Begriff "korrespondierend" wird im Rahmen der vorliegenden Erfindung derart verstanden, dass die Schließmatrize eine Kontur ausweist, die im Wesentlichen dem Negativ der bereits weitergeformten Längsnuten oder Längsflächen entspricht.

Gemäß einer weiteren bevorzugten Ausführungsform wird nach dem ersten Formen zumindest eine der Längsnuten oder Längsflächen durch Verjüngen in einer dritten Matrize weiter umgeformt. Die dritte Matrize kann identisch zu den vorstehend beschriebenen Matrizen sein, wobei die Matrizen im Folgenden auch als erste Matrize und die Schließmatrize im Folgenden auch als zweite Matrize bezeichnet wird. Die dritte Matrize ist bevorzugt eine von den ersten und zweiten Matrizen separierte Matrize, d.h. beispielsweise eine Matrize, die der ersten Matrize im Herstellungsprozess nachgeordnet und der zweiten Matrize im Herstellungsprozess vorgeordnet ist. Durch Verjüngen lassen sich die Querschnitte von Rohteilen aus Stahl maximal bis 30% umformen. Wenn also größere Umformungen etwa für tiefere oder breitere Nuten erforderlich sind, kann durch ein nochmaliges Verjüngen in der dritten Matrize das Ziel erreicht werden.

Gemäß einer weiteren bevorzugten Ausführungsform erfolgt das zweite Formen in zwei Teilformschritten. Die zwei, vorzugsweise aufeinanderfolgenden Teilformschritte können auf einer einzelnen Schließmatrize oder vorzugsweise auf zwei separaten Schließmatrizen durchgeführt werden. Hierdurch sind größere Umformungen möglich.

Weiter bevorzugt erfolgt die Querschnittsreduzierung des Verbindungsabschnitts beim Formen in einem Bereich von 20 bis 40% des Ausgangsquerschnitts. Dabei liegt der Anteil für das Vorformen der Längsnut oder -fläche zwischen 0 und 30%. Weiter bevorzugt erfolgt das oben beschriebene weitere Verjüngen der Längsnuten und -flächen mit einer Querschnittsreduzierung bezogen auf den Ausgangsquerschnitt im Bereich von 30 bis 60%. Weiter bevorzugt erfolgt die Querschnittsreduzierung beim Weiterformen mit den Umformkörpern in einem Bereich von 30 bis 85%. Diese Umformverhältnisse haben sich als besonders schonend für den Werkstoff des Rohlings und auch für die Lebensdauer der Matrizen erwiesen.

Weiter bevorzugt wird die mindestens eine vorgeformte Längsnut oder -fläche mit einem Stauchstempel zur Endfläche hin geschlossen. Dies ist nunmehr ein einfacher Vorgang, da durch das Stauchen nur noch eine relativ geringe Querschnittsverformung durchgeführt werden muss, denn der offene Querschnitt zur Endfläche hin ist deutlich kleiner als bei den bekannten Verfahren. Der Stauchstempel kann dabei bevorzugt Ausnehmungen aufweisen, die den weitergeformten Längsnuten entsprechen. D.h. beispielsweise, dass der Stauchstempel an einem Vorderende Aussparungen aufweist, welche korrespondierend zu den weitergeformten Längsnuten oder -flächen ausgebildet sind bzw. einem Negativ dieser entsprechen, die zur Endfläche im fertigen Zustand des Verbindungsabschnitts geöffnet sind.

Gemäß einer weiteren bevorzugten Ausführungsform wird die Endfläche vor dem ersten Formen, insbesondere im Bereich der späteren Längsnuten, vorgeformt, beispielsweise durch eine trichterförmige kurze Nut. Dadurch kann erreicht werden, dass ein sich beim ersten Formen der Längsnuten an der Endfläche bildender Grat in einen Bereich der trichterförmigen Nut verlagert wird, wo dieser für das weitere Verfahren nicht störend wirkt.

Weiter bevorzugt erfolgen die Schritte des Nach- oder Weiterformens und Schließens der Endfläche mit einem Stauchstempel in einer Matrize oder in der gleichen Stufe einer Mehrstufenpresse. Zudem kann der Schritt des Nach- oder Weiterformens gleichzeitig oder vor dem Schließen der Endfläche erfolgen. Hierdurch wird die Zahl der erforderlichen Matrizen und Maschinenstufen verringert und zusätzlich bewirkt, dass das Schließen der Endfläche auf das Nach- oder Weiterformen nicht störend wirkt.

Bevorzugt erfolgen die Schritte des vorstehend beschriebenen Bereitstellens, Einformens und Nach- oder Weiterformens, gegebenenfalls das Vorformen der Endfläche sowie das Schließen der Endfläche in einer Mehrstufenpresse. Hierdurch werden eine hohe Produktionsleistung und zugleich das lagerichtige Zuführen des Rohlings in die jeweils nächste Umformstufe erzielt, da der Rohling in einer definierten Position gehalten werden kann.

Weiter bevorzugt werden ein vorderer Arbeitsabschnitt des Bohrers und/oder Nuten für den Bohrkleintransport (Bohrmehlnuten) auf der gleichen Maschine durch Fließpressen und/oder Verjüngen geformt, mittels derer auch die Längsnuten und -flächen gefertigt werden. Hierdurch wird die Effizienz des Fertigungsverfahrens weiter erhöht.

Gemäß einer weiteren bevorzugten Ausführungsform schneidet die vorgeformte mindestens eine Längsnut oder Längsfläche an einem Verbindungsabschnitt eines Bohrers die zylinderförmige Umfangsfläche unterhalb oder in gleicher Höhe wie die fertige Längsnut oder Längsfläche.

Gemäß einer weiteren bevorzugten Ausführungsform werden die Verbindungsabschnitte an beiden Enden einer Stange eingeformt, insbesondere auf einer Maschine. Gemäß einer bevorzugten Fortbildung dieser Ausführungsform werden die Längsnuten oder Längsflächen von einem Ende der Stange über mindestens die Hälfte der Länge der Stange durch Fließpressen und/oder Verjüngen eingeformt. Hierdurch wird das Flächenträgheitsmoment gegenüber dem Flächenträgheitsmoment einer gleichgroßen kreisförmigen Fläche erhöht, wodurch entweder größere Knicklasten möglich sind oder das Gewicht der Stange reduziert werden kann. Im Falle einer Kaltumformung erhöht sich zugleich die Festigkeit gegenüber der des Ausgangsmaterials. Insbesondere für die im Automobilbau angestrebte Gewichtsreduzierung sind dies wichtige Vorteile.

Gemäß einer weiteren bevorzugten Ausführungsform weist die durch die Umformkörper erzeugte mindestens eine Längsnut zumindest über einen Längsbereich eine sich verändernde Querschnittsfläche auf (rechtwinklig zur Längsachse der Stange betrachtet). Dies hat den Vorteil, dass bei einer Verbindungsstange, bei der die Endbereiche mit Kunststoff umspritzt sind, in axialer Richtung wirkende Abzugskräfte durch die formschlüssige Verbindung des Kunststoffes mit dem Verbindungsabschnitt auch ohne ein Schließen der Längsnuten zur Endfläche hin übertragen werden können.

Bevorzugt kann das vorstehend beschriebene Bereitstellen, Einformen und Weiterformen sowie das Schließen der Endfläche Kaltumformen, bevorzugt Warm- oder Halbwarmumformen umfassen und zudem auf einer eigenen Maschine erfolgen. Durch das Warm-oder Halbwarmumformen ist auch die Fertigung von Verbindungsabschnitten möglich, deren Querschnittsform mittels Kaltumformung nicht oder nur schwer zu erstellen ist.

Die eingangs genannte Aufgabe wird ferner gelöst durch ein Halbwerkzeug, einen Bohrer oder eine Stange mit einem Verbindungsabschnitt und/oder einem vorderen Arbeitsabschnitt, umfassend: eine im Wesentlichen zylinderförmige Umfangsoberfläche, eine Endfläche und mindestens zwei Längsnuten oder Längsflächen in der Umfangsoberfläche, von denen mindestens eine zur Endfläche des Verbindungsabschnitts hin zumindest teilweise geschlossen ist, wobei mindestens eine Längsnut oder Längsfläche in einem ersten und/oder einem zweiten Formschritt geformt ist. Dabei besteht ein besonderer Vorteil der leichten Herstellbarkeit bzw. Fertigbarkeit, in der Möglichkeit auf preiswertere Materialien zu wechseln, da es durch die Art der Umformung zu einer Materialverfestigung kommt, sowie der Fertigung auf einer Maschine mit höherer Fertigungsgeschwindigkeit als es bisher möglich war.

Gemäß einer bevorzugten Ausführungsform des Halbwerkzeugs, Bohrers oder der Stange ist mindestens eine der zwei Längsnuten oder Längsflächen durch Fließpressen oder Verjüngen in einer Matrize vorgeformt und die mindestens eine Längsnut oder Längsfläche mittels zumindest radial beweglichen Umformkörpern weitergeformt.

Die eingangs genannte Aufgabe kann ferner gelöst werden durch eine Stange mit mindestens einem an ihrem Ende angeordneten Verbindungsabschnitt, der nach dem erfindungsgemäßen Verfahren hergestellt wird. Diese Stange kann ohne den zusätzlichen Walzvorgang der Rillen auf einer Maschine mit erhöhter Geschwindigkeit gefertigt werden. Zusätzlich kann das Stangengewicht um bis zu etwa 35 % reduziert werden durch Ausbilden der Längsnuten über den wesentlichen Teil der Länge der Stange und ein preiswerteres Material eingesetzt werden.

Die eingangs genannte Aufgabe wird ferner gelöst durch eine Stange zum Aufnehmen von axialen Zug- und Druckkräften und von Drehmomenten, mit einer im Wesentlichen zylinderförmigen Umfangsoberfläche und mindestens einer im Wesentlichen parallel zu der Längsachse der Stange und entlang mindestens eines Teils der Länge der Stange verlaufenden Längsnut, welche zur Endfläche hin zumindest teilweise geschlossen ist, wobei die Längsnut zumindest über einen Längsbereich eine sich verändernde Querschnittsfläche aufweist (rechtwinklig zur Längsachse der Verbindungsstange betrachtet). Diese Stange hat den Vorteil, dass bei einer Verbindungsstange, bei der die Endbereiche mit Kunststoff umspritzt sind, in axialer Richtung wirkende Abzugskräfte durch die formschlüssige Verbindung des Kunststoffes mit dem Verbindungsabschnitt auch ohne ein Schließen der Längsnuten zur Endfläche hin übertragen werden können. Bevorzugt sind die Querschnittsveränderungen in den Längsnuten derart gegeneinander versetzt angeordnet, dass die Wandstärke zwischen den einzelnen Längsnuten annähernd konstant bleibt. Bei einer mäanderförmigen Längsausbildung der Nuten besteht nach dem Vorformen der Längsnuten das Weiterformen mit den Umformkörpern dann lediglich in einem relativ kräftearmen Verbiegen der Nuten. Die zulässigen axialen Abzugskräfte können durch die Form der Längsnuten genau gewählt werden.

Weiter bevorzugt umfasst die Stange Stahl oder ein Leichtmetall wie Aluminium bzw. ist aus diesem hergestellt oder besteht aus diesem. Im Falle, dass ein geringes Gewicht angestrebt wird, kann die Stange auch aus Aluminium gefertigt werden, wobei Aluminiumdraht oder eine Aluminiumstange als Ausgangshalbzeug verwendet werden kann.

Die eingangs genannte Aufgabe wird ferner gelöst durch eine Kombination von Matrizen zur Herstellung von Verbindungsabschnitten für Halbwerkzeuge, Bohrer und Stangen gemäß dem vorstehend beschriebenen erfindungsgemäßen Verfahren. Wie oben beschrieben, besteht ein besonderer Vorteil der erfindungsgemäßen Matrizen in der leichten Herstellbarkeit der Halbwerkzeuge, Bohrer und Stangen, der Möglichkeit auf preiswertere Materialien zu wechseln, da durch die Art der Umformung es zu einer Materialverfestigung kommt, sowie der Fertigung auf einer Maschine mit höherer Fertigungsgeschwindigkeit als es bisher möglich war. Für diese Konstruktion wird separater Schutz beansprucht.

Die eingangs genannte Aufgabe wird ferner gelöst durch eine Vorrichtung gemäß Anspruch 8, zur Fertigung eines Verbindungsabschnitts als Teil eines Werkzeugs, insbesondere eines axialbeweglich in der Werkzeugaufnahme eines Bohrhammers befestigten Bohrers, wobei der Verbindungsabschnitt eine Endfläche und eine im Wesentlichen zylinderförmige Umfangsoberfläche aufweist, umfassend: eine erste Matrize, mittels welcher mindestens zwei Längsnuten oder Längsflächen in die Umfangsoberfläche formbar sind, und eine zweite Matrize, mittels welcher mindestens eine Längsnut oder Längsfläche formbar ist.

Erfindungsgemäß umfasst die erste Matrize eine Einform-Matrize, mittels welcher mindestens zwei Längsnuten oder Längsflächen in die Umfangsoberfläche durch Fließpressen oder Verjüngen vorformbar sind, und die zweite Matrize eine Weiterform-Schließmatrize mit zumindest radial beweglichen Umformkörpern, mittels welcher mindestens eine vorgeformte Längsnut oder Längsfläche weiterformbar ist.

Gemäß einer weiteren bevorzugten Ausführungsform der Vorrichtung ist mindestens eine Längsnut zur Endfläche des Verbindungsabschnitts hin zumindest teilweise geschlossen und als Verriegelungsnut ausgebildet und mindestens eine Längsnut zur Endfläche des Verbindungsabschnitts hin geöffnet und als Drehmitnahmenut ausgebildet ist.

Bevorzugte Ausführungsformen der Erfindung werden beispielhaft anhand der beiliegenden Figuren beschrieben. Es zeigen:
- Figur 1:: Zwischenprodukte eines erfindungsgemäßen Verbindungsabschnitts, der nach einem erfindungsgemäßen Verfahren gefertigt wird,
- Figur 2:: Zwischenschritte des erfindungsgemäßen Verfahrens zur Herstellung des in Figur 1 gezeigten erfindungsgemäßen Verbindungsabschnitts,
- Figur 3:: Zwischenschritte des erfindungsgemäßen Verfahrens zur Herstellung des in Figur 1 gezeigten erfindungsgemäßen Verbindungsabschnitts,
- Figur 4:: ein Ausführungsbeispiel eines erfindungsgemäßen Stauchstempels,
- Figur 5:: ein zweites Ausführungsbeispiel eines erfindungsgemäßen Verbindungsabschnitts mit einer beispielhaften offenen Drehmitnahmenut,
- Figur 6:: ein drittes Ausführungsbeispiel eines erfindungsgemäßen Verbindungsabschnitts in Form von Zwischenprodukten einer erfindungsgemäßen Stange, und
- Figur 7:: ein Ausführungsbeispiel einer erfindungsgemäßen Hybridpendelstütze.

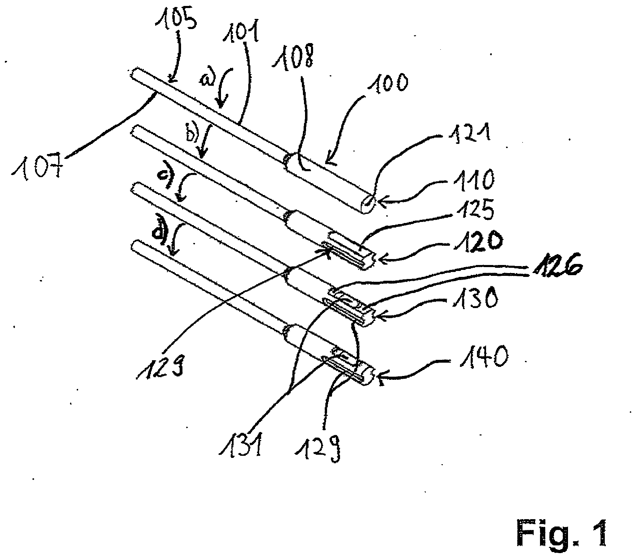

Figur 1 zeigt Zwischenprodukte eines Verbindungsabschnitts 100, der nach dem erfindungsgemäßen Verfahren gefertigt wird. Der Verbindungsabschnitt 100 bildet einen Teil eines Werkzeuges 101, insbesondere eines Bohrers, welches einen Arbeitsabschnitt 105 und ein Einsteckende 108, welches als Verbindungsabschnitt 100 vorgesehen ist, aufweist. Zudem weist der Verbindungsabschnitt eine Endfläche 121 auf. Figur 1 zeigt den erfindungsgemäß gefertigten Verbindungsabschnitt 100 im Rohzustand 110 vor dem Einformen von Längsnuten oder Längsflächen. In einem Verfahrensschritt a) des erfindungsgemäßen Verfahrens zur Herstellung des Verbindungsabschnitts 100 kann der Rohzustand 110 in Form einer Stange oder eines Bohrerhalbzeugs 107 mit einer im Wesentlichen zylinderförmigen Umfangsoberfläche 108 bereitgestellt werden.

Figur 1 zeigt zudem den erfindungsgemäßen Verbindungsabschnitt 100 als Zwischenprodukt 120, nachdem darin Drehmitnahmenuten 129 sowie Längsflächen 125 als Vorgänger für die im weiteren Verlauf noch auszubildenden Verriegelungsnuten 131 eingeformt worden sind. Die Drehmitnahmenuten 129 sowie die Längsflächen 125 bilden somit Längsnuten 129 und Längsflächen 125. Das in Figur 1 gezeigte Zwischenprodukt 120 wird in dem erfindungsgemäßen Verfahrensschritt b) durch Einformen der Längsnuten 129 und der Längsflächen 125 in die Umfangsoberfläche 108, beispielsweise durch Fließpressen oder Verjüngen in Matrizen gefertigt. Dabei wird in dem Verfahrensschritt b) mindestens eine der Längsnuten oder Längsflächen lediglich vorgeformt, d.h. wird im weiteren Verlauf des Verfahrens noch weitergeformt, wie im Folgenden noch genauer beschrieben wird.

Figur 1 zeigt desweiteren ein Zwischenprodukt 130 des Verbindungsabschnitts 100, nachdem ein weiterer Verfahrensschritt c) durchgeführt wurde. In diesem Verfahrensschritt c) werden die als Vorgänger für in diesem Schritt auszubildenden Verriegelungsnuten 131 dienenden Längsflächen 125 in einer Schließmatrize mit radial beweglichen Umformkörpern weiter in die Verriegelungsnuten 131 geformt. Die von den radial beweglichen Umformkörpern nicht erfassten Abschnitte 126 werden dadurch dann gegenüber den als Vorgänger für die Verriegelungsnuten 131 dienenden Längsflächen 125 etwas aufgeschoben, so dass die radiale Ausdehnung der Abschnitte 126 etwas größer ist als die der als Vorgänger für die Verriegelungsnuten 131 dienenden Längsflächen 125.

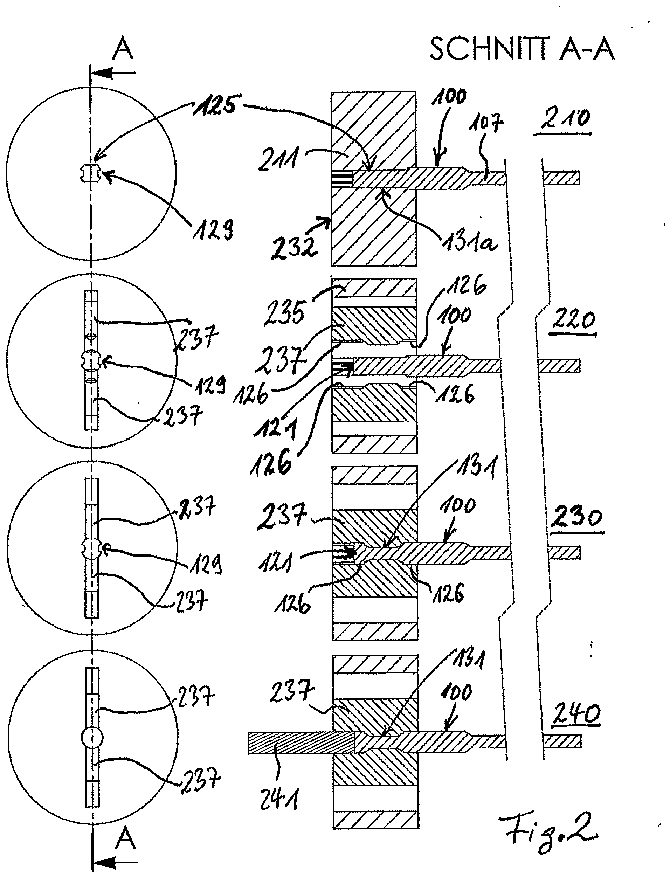

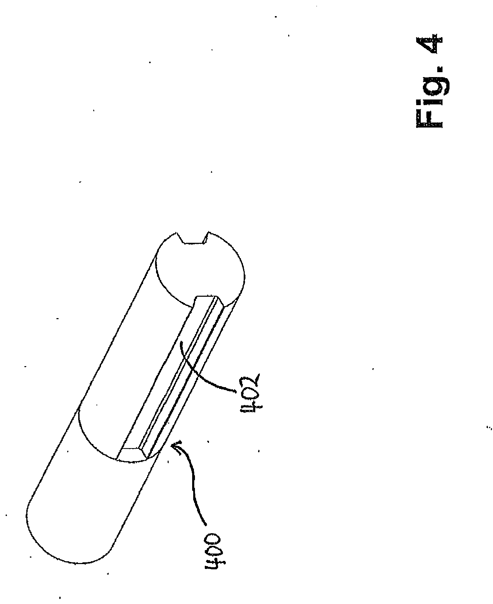

Figur 1 zeigt in Betrachtungsrichtung ganz unten den fertigen Verbindungsabschnitt 100 als Endprodukt 140, bei dem ein Verfahrensschritt d) des erfindungsgemäßen Verfahrens zur weiteren Umformung beispielsweise mittels einer weiteren Schließmatrize 237 (siehe Figur 2) ausgeführt wurde und die Verriegelungsnut 131 weiter geschlossen und ausgeformt wurde. Schritt d) kann auch als Teil des Schrittes c) durchgeführt werden. In dem weiteren Verfahrensschritt d) wird zum vollständigen Verschließen der Verriegelungsnuten 131 ein an den Seiten der Drehmitnahmenuten 129 Aussparungen aufweisender, in den Figuren 2 und 4 dargestellter Stauchstempel 241 in Längsrichtung gegen die Endfläche 121 gepresst. Das heißt, der Stauchstempel 241 wird in der Figur 1 in Betrachtungsrichtung von rechts nach links gegen die Endfläche 121 des Verbindungsabschnitts 100 gedrückt. Dies führt zum vollständigen Schließen der Verriegelungsnut 131, während die Drehmitnahmenuten 129 in Richtung der Endfläche 121 offen bleiben.

Figur 2 zeigt Zwischenschritte 210, 220, 230, 240 des erfindungsgemäßen Verfahrens zur Herstellung des in Figur 1 gezeigten erfindungsgemäßen Verbindungsabschnitts 100. Figur 2 zeigt dabei eine Draufsicht der Verfahrensschritte sowie eine zugehörige Querschnittsansicht A-A der Verfahrensschritte. In einem dem Verfahrensschritt 210 im Verfahrensverlauf vorgeordneten erfindungsgemäßen Verfahrensschritt a) wird zunächst eine Stange oder ein Bohrerhalbzeug 107, wie in Figur 1 gezeigt, bereitgestellt. In dem Verfahrensschritt 210 werden entsprechend dem erfindungsgemäßen Verfahrensschritt b) Drehmitnahmenuten 129 in den Verbindungsabschnitt 100 eingeformt.

In dem Verfahrensschritt 210 werden weiterhin auch die als Vorgänger für die Verriegelungsnuten 131 dienenden Längsflächen 125 in den Verbindungsabschnitt 100 mittels einer ersten Matrize 211, vorzugsweise durch Fließpressen oder Verjüngen eingeformt. Beim Einschieben des Verbindungsabschnitts 100 in die Matrize 211 (im Schnitt A-A von rechts) formen die Erhebungen 131a der Matrize 211 die offenen Längsflächen 125 an dem Verbindungsabschnitt 100 ein.

In den Verfahrensschritten 220 und 230 wird entsprechend Schritt c) der Verbindungsabschnitt 100 in eine zweite Matrize 235, welche als Nach- oder Weiterform-Schließmatrize ausgebildet ist, eingeführt und geformt. Dabei sind die vorgeformten Längsnuten 125 oder Längsflächen 125 derart dimensioniert, dass das in dem Verfahrensschritt 230 verdrängte Material in Umformkörpern 237 der Matrize 235 gebildete, vorgeformte Freiräume 126 verdrängt werden kann und das Volumen der Freiräume 126 mit dem Volumen des in Schritt 230 verdrängten Materials korrespondiert. Die dem umzuformenden Körper zugewandten Oberflächen der Umformkörper 237 können mit einer zur Umformung von aus Leichmetall bestehenden Körpern geeigneten Beschichtung versehen sein.

In einem darauffolgenden Verfahrensschritt 230 schließen sich radial bewegliche Umformkörper 237 der zweiten Matrize 235 radial nach innen. D.h. die Umformkörper 237 der zweiten Matrize 235 werden in den Verbindungsabschnitt 100 derart hineingepresst, dass mittels der Umformkörper 237 im Bereich der Längsflächen 125 Verriegelungsnuten 131 in dem Verbindungsabschnitt 100 ausgeformt werden. Die von den radial beweglichen Umformkörpern 237 nicht erfassten Abschnitte 126 werden dadurch derart aufgeschoben, so dass die Verriegelungsnuten 131 zur Endfläche 121 hin geschlossen werden, wie in der zugehörigen Draufsicht 230 zu erkennen ist.

In dem weiteren optionalen Verfahrensschritt 240 wird zum Verschließen der Verriegelungsnuten 131 der Stauchstempel 241 in Längsrichtung gegen die Endfläche 121 gepresst. Das heißt, der Stauchstempel 241 wird in Betrachtungsrichtung von links nach rechts in die zweite Matrize 235 eingeführt und gegen die Fläche 121 des Verbindungsabschnitts 100 gedrückt. Dies führt zum Schließen der Verriegelungsnuten 131. Dieser Verfahrensschritt kann notwendig sein, wenn etwa die Form der Verriegelungsnuten 131 ein vollständiges Auffüllen des Endbereiches 126 im Verfahrensschritt 230 nicht gewährleistet.

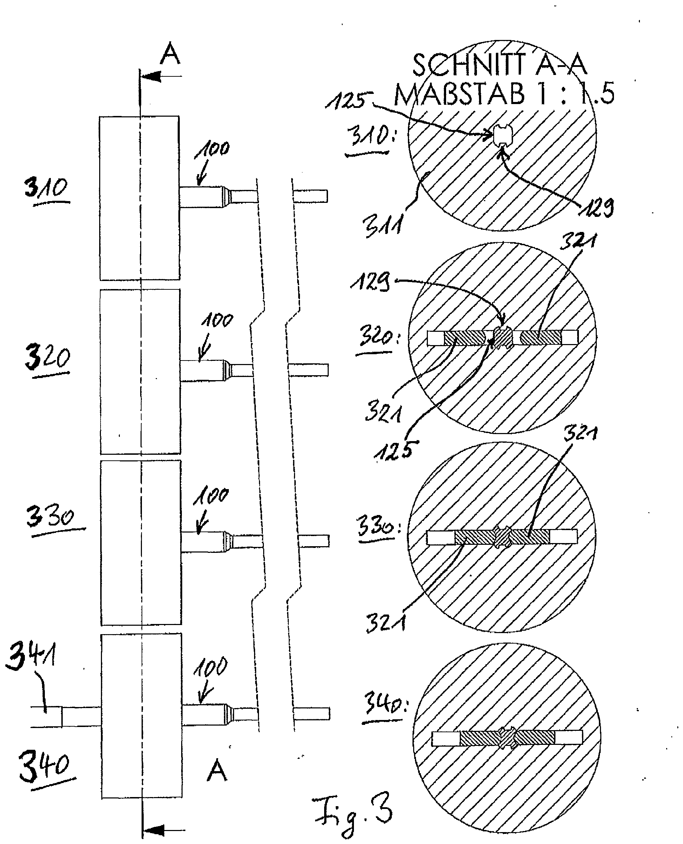

Figur 3 zeigt Zwischenschritte 310, 320, 330, 340 des erfindungsgemäßen Verfahrens zur Herstellung des in Figur 1 gezeigten erfindungsgemäßen Verbindungsabschnitts 100. Figur 3 zeigt dabei eine Seitenansicht der Verfahrensschritte sowie eine zugehörige Querschnittsansicht A-A der Verfahrensschritte im Maßstab 1:1,5. In dem Verfahrensschritt 310 wird der Verbindungsabschnitt 100 in eine Matrize 311 eingeführt, so dass sich in dem darauffolgenden Verfahrensschritt 320 bespielsweise den Umformkörpern 237 der Figur 2 entsprechende Umformkörper 321 radial nach innen gerichtet auf den Verbindungsabschnitt 100 zubewegen. Die Umformkörper 321 pressen in einem Verfahrensschritt 330 eine Längsnut 131 in den Verbindungsabschnitt 100, beispielsweise die in Figur 1 gezeigte Verriegelungsnut 131. In dem weiteren Verfahrensschritt 340 wird ein - im Querschnitt A-A nicht sichtbarer - Stauchstempel 341 in Längsrichtung (in Betrachtungsrichtung des linken Teils der Figur 3 von links nach rechts) in die Matrize 311 eingeführt, so dass die in Figur 1 gezeigte Endfläche 121 gestaucht wird.

Figur 4 zeigt eine Ausführungsform 400 eines erfindungsgemäßen, oben in Bezug auf die Figuren 1, 2 und 4 beschriebenen Stauchstempels 241 mit an die Drehmitnahmenuten 129 angepassten Ausnehmungen 402.

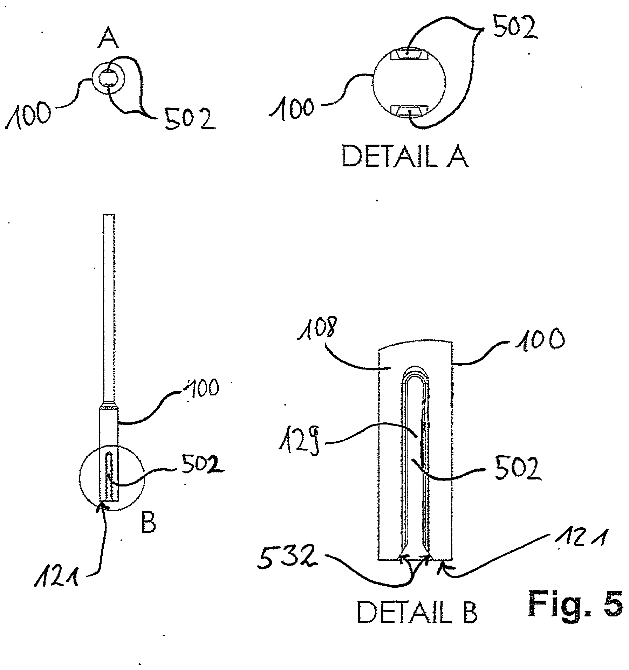

Figur 5 zeigt ein Ausführungsbeispiel eines nicht-beanspruchten Verbindungsabschnitts 100 mit einer beispielhaften offenen Drehmitnahmenut 502. Dabei zeigt Figur 5 eine Draufsicht A des Verbindungsabschnitts 100 und eine Detailansicht DETAIL A der Draufsicht A. Desweiteren zeigt Figur 5 eine Seitenansicht B des Verbindungsabschnitts 100 und eine Detailansicht DETAIL B der Seitenansicht B. Ein Übergang 532 von der Drehmitnahmenut 502 zur Endfläche 121 ist trichterförmig ausgeformt und wird vor dem Schritt b erzeugt. Hierdurch werden Faltungen beim nachfolgenden Einformen der Drehmitnahmenut 502 im Bereich der Endfläche 121 vermieden. Zusätzlich bildet der Trichter 532 eine Einführhilfe beim Einstecken des Werkzeuges in die Bohrmaschine und für das Einführen des Rohlings in die Folgematritzen.

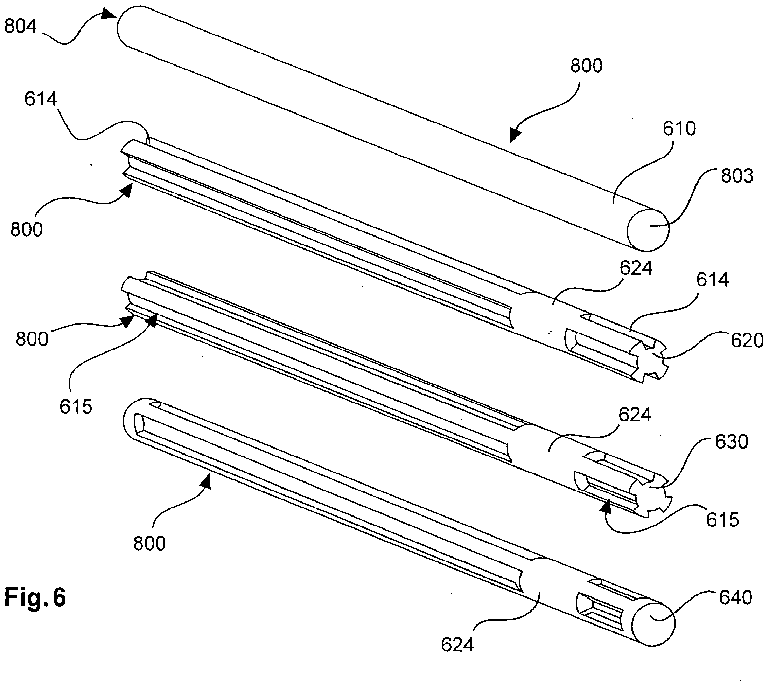

Die Figur 6 zeigt ein zweites Ausführungsbeispiel eines nichtbeanspruchten Verbindungsabschnitts 100 in Form von Zwischenprodukten 610, 620, 630, 640 einer Stange 800, ähnlich zu den in Figur 1 gezeigten Zwischenprodukten 110, 120, 130, 140 des Bohrerhalbzeugs 107. Dabei zeigt Figur 6 eine perspektivische Ansicht der Zwischenprodukte, wobei Längsnuten 614 an beiden Enden 803 und 804 der Stange 800 eingeformt sind. Dabei sind die Längsnuten 614 von dem in der Figur 6 hinten links dargestellten Ende 804 der Stange 800 über mindestens die Hälfte der Länge der Stange 800, hier über etwa etwa drei Viertel der Länge der Stange 800, durch Fließpressen und/oder Verjüngen eingeformt worden. Zwischen den links dargestellten Längsnuten 614 und den rechts dargestellten Längsnuten 614 befindet sich ein unveränderter Abschnitt 624. Im Schritt 630 werden die Längsnuten in ihren jeweiligen Endbereichen 615 analog dem Schritt 230 in Figur 2 tiefer eingeformt. Abschließend sind dann in Schritt 640 die Längsnuten 614 an den Enden 803 und 804 mit einem Stauchstempel, etwa dem Stauchstempel 241 der Ausführungsform der Figuren 2 und 4, geschlossen worden.

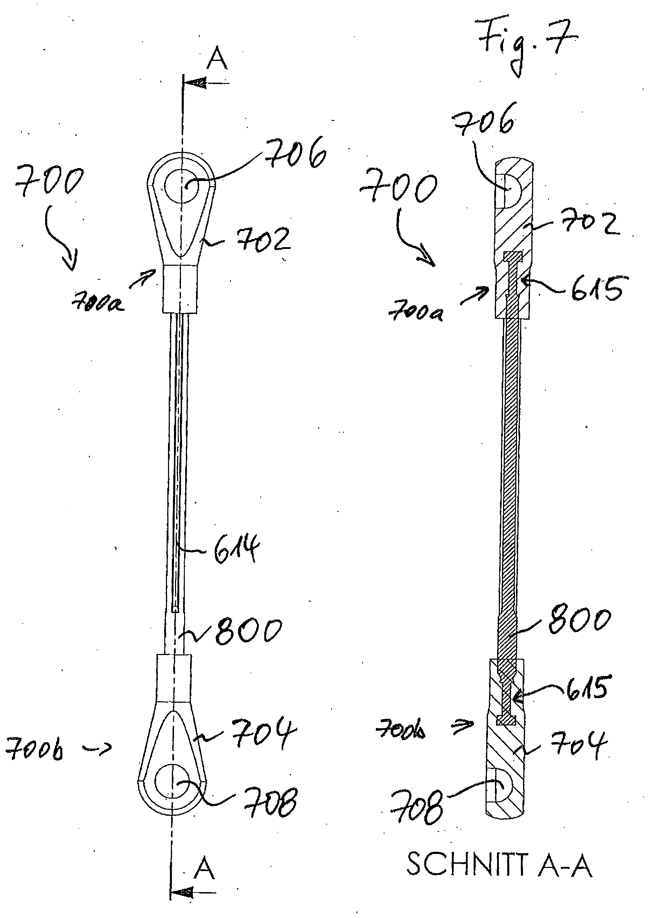

Figur 7 zeigt ein Ausführungsbeispiel 700 einer Hybridpendelstütze in einer Draufsicht und im Querschnitt A-A. Die dargestellte Hybridpendelstütze 700 besteht zum einen aus einer Stange 800 gemäß Figur 6 und weist darüber hinaus an ihren Enden 700a und 700b aus Kunststoff gebildete Umspritzungen 702 und 704 auf. Aufgrund der sich über mindestens die Hälfte der Länge der Stange 800, hier über etwa drei Viertel der Länge der Stange 800, erstreckenden Längsnut oder Rippe 614 weist eine derart ausgebildete Hybridpendelstütze 700 ein höheres Flächenträgheitsmoment auf als vergleichbare Pendelstützen ohne Längsnut oder Rippe 614. Die Umspritzungen 702 und 704 weisen Sacklöcher 706 und 708 auf.

## Patentansprüche

1. Verfahren zur Herstellung eines mit einer Endfläche (121) versehenen Verbindungabschnitts (100) als Teil eines Werkzeuges (101), insbesondere eines axialbeweglich in der Werkzeugaufnahme eines Bohrhammers befestigten Bohrers, oder als Teil einer Verbindungsstange (800), wobei der Verbindungsabschnitt (100) mindestens zwei Längsnuten (125) oder Längsflächen (125) aufweist, von denen mindestens eine zur Endfläche (121) des Verbindungsabschnitts (100) hin zumindest teilweise geschlossen ist, mit den Verfahrensschritten
a) Bereitstellen eines Bohrerhalbzeugs (107) oder einer Stange (800) mit einer im Wesentlichen zylinderförmigen Umfangsoberfläche (108),
b) erstes Formen (210) der mindestens zwei Längsnuten (125) oder Längsflächen (125) in die Umfangsoberfläche (108), wobei das erste Formen (210) als Einformen durch Fließpressen oder Verjüngen in einer Matrize (211; 311) erfolgt und für mindestens eine der Längsnuten (125) oder Längsflächen (125) ein Vorformen darstellt,
c) zweites Formen (230) der mindestens einen vorgeformten Längsnut (125) oder Längsfläche (125), **dadurch gekennzeichnet, dass** das zweite Formen (230) als Weiterformen der mindestens einen vorgeformten Längsnut (125) in einer zweiten, als Weiterform-Schließmatrize (235) ausgebildeten Matrize mit zumindest einem radial beweglichen Umformkörper (237) erfolgt,
wobei die zumindest eine vorgeformte Längsnut (125) oder Längsfläche (125) derart dimensioniert ist, dass das in Schritt c) verdrängte Material in einen, in dem Umformkörper (237) gebildeten, vorgeformten Freiraum (126) verdrängt werden kann und das Volumen des Freiraumes mit dem Volumen des in Schritt c) verdrängten Materials im Wesentlichen korrespondiert.

2. Verfahren nach Anspruch 1, wobei der, bzw. die radial beweglichen Umformkörper (237) in Aussparungen der Schließmatrize (235) geführt werden.

3. Verfahren nach einem der vorstehenden Ansprüche, wobei die Schließmatrize (235) eine dem Verbindungsabschnitt (100) zugewandte, insbesondere nach innen gerichtete, Kontur aufweist, die korrespondierend zu einer gemäß Schritt b) geformten Längsnut (129) oder Längsfläche (129) ausgebildet ist und wobei der, bzw. die radial beweglichen Umformkörper (237) in ihrem Umformbereich korrespondierend den Verriegelungsnuten (131) ausgebildet sind.

4. Verfahren nach einem der vorstehenden Ansprüche, wobei das Formen in Schritt c) in zwei Teilformschritten erfolgt.

5. Verfahren nach einem der vorstehenden Ansprüche, wobei die Endfläche (121) des Verbindungsabschnitts (100) vor dem Schritt b), insbesondere im Bereich (532) der späteren Längsnuten (129), vorgeformt wird.

6. Verfahren nach einem der vorstehenden Ansprüche, wobei die Verbindungsabschnitte (100) an beiden Enden (803; 804) einer Stange (800) eingeformt werden.

7. Verfahren nach Anspruch 6, wobei die Längsnuten (614) oder Längsflächen (614) von einem Ende (804) der Stange (800) über mindestens die Hälfte der Länge der Stange (800) durch Fließpressen und/oder Verjüngen eingeformt werden.

8. Vorrichtung zur Fertigung eines Verbindungsabschnitts (100) als Teil eines Werkzeugs (101), insbesondere eines axialbeweglich in der Werkzeugaufnahme eines Bohrhammers befestigten Bohrers, wobei der Verbindungsabschnitt (100) eine Endfläche (121) und eine im Wesentlichen zylinderförmige Umfangsoberfläche (108) aufweist, oder als Teil einer Stange (800), umfassend:
- eine erste Matrize (211), mittels welcher mindestens eine Längsnut (125;129;614) oder Längsfläche (125;129;614) in die Umfangsoberfläche (108) durch Fließpressen oder Verjüngen formbar ist, und **gekennzeichnet durch**
- eine zweite Matrize (235), als Weiterform-Schließmatrize mit zumindest einem radial beweglichen Umformkörper (237) mittels welcher mindestens eine der vorgeformten Längsnut (125; 129; 614) oder Längsfläche (125; 129; 614) weiter formbar ist , wobei ein vorgeformter Freiraum (126) in dem zumindest einen radial beweglichen Umformkörper (237) vorgesehen ist, in den von dem zumindest einen Umformkörper verdrängtes Material verdrängt werden kann, und somit mindestens eine Längsnut (125, 129; 614) zur Endfläche des Verbindungsabschnitts (100) hin zumindest teilweise geschlossen und als eine Verriegelungsnut (131;615) formbar beziehungsweise ausbildbar ist.

## Claims

1. Method for producing a connection portion (100) provided with an end surface (121) as part of a tool (101), in particular a drill bit secured in the tool holder of a hammer drill so as to be axially movable, or as part of a connecting rod (800),
the connection portion (100) having at least two longitudinal grooves (125) or longitudinal surfaces (125), at least one of which is at least partially closed towards the end surface (121) of the connection portion (100),
comprising the method steps
a) providing a drill bit semi-finished product (107) or a rod (800) having a substantially cylindrical circumferential surface (108),
b) first forming (210) of the at least two longitudinal grooves (125) or longitudinal surfaces (125) in the circumferential surface (108), the first forming (210) being effected as a shaping process by impact extrusion or tapering in a die (211; 311) and constituting a pre-shaping process for at least one of the longitudinal grooves (125) or longitudinal surfaces (125),
c) second forming (230) of the at least one pre-shaped longitudinal groove (125) or longitudinal surface (125) ,
**characterised in that**
the second forming (230) is effected as an additional shaping of the at least one pre-shaped longitudinal groove (125) in a second die provided in the form of an additional shaping closing die (235) having at least one radially movable reshaping body (237),
the at least one pre-shaped longitudinal groove (125) or longitudinal surface (125) being dimensioned so that in step c), the forced material can be forced into a pre-shaped space (126) formed in the reshaping body (237) and the volume of the space substantially corresponds to the volume of forced material in step c) .

2. Method as claimed in claim 1, wherein the radially movable reshaping body or bodies (237) is/are guided in recesses of the closing die (235).

3. Method as claimed in one of the preceding claims, wherein the closing die (235) has a contour facing the connection portion (100), in particular directed inwardly, which is designed so as to correspond to a longitudinal groove (129) or longitudinal surface (129) formed as specified in step b) and wherein the radially movable reshaping body or bodies (237) is/are designed to correspond to locking grooves (131) in their reshaping region.

4. Method as claimed in one of the preceding claims, wherein forming in step c) is effected in two partial shaping steps.

5. Method as claimed in one of the preceding claims, wherein the end surface (121) of the connection portion (100) is pre-shaped prior to step b), in particular in the region (532) of the subsequent longitudinal grooves (129).

6. Method as claimed in one of the preceding claims,
wherein the connection portion (100) is shaped at both ends (803; 804) of a rod (800).

7. Method as claimed in claim 6, wherein the longitudinal grooves (614) or longitudinal surfaces (614) are shaped from one end (804) of the rod (800) across at least half of the length of the rod (800) by impact extrusion and/or tapering.

8. Device for producing a connection portion (100) as part of a tool (101), in particular a drill bit secured in the tool holder of a hammer drill so as to be axially movable, wherein the connection portion (100) has an end surface (121) and a substantially cylindrical circumferential surface (108) or is part of a rod (800), comprising:
- a first die (211) by means of which at least one longitudinal groove (125; 129; 614) or longitudinal surface (125, 129, 614) can be formed in the circumferential surface (108) by impact extrusion or tapering, **characterised by**
- a second die (235) in the form of an additional shaping closing die having at least one radially movable reshaping body (237) by means of which at least one of the pre-shaped longitudinal groove (125; 129; 614) or longitudinal surface (125, 129, 614) can be additionally shaped, wherein a pre-shaped space (126) is provided in the at least one radially movable reshaping body (237) into which material forced by the at least one reshaping body can be forced and at least one longitudinal groove (125, 129; 614) can thereby be at least partially closed towards the end surface of the connection portion (100) and can be formed or fashioned as a locking groove (131; 615).

## Revendications

1. Procédé de fabrication d'une section de liaison (100) pourvue d'une surface d'extrémité (121) en tant que partie d'un outil (101), en particulier d'un foret fixé de manière axialement mobile dans le logement d'outil d'un perforateur, ou en tant que partie d'une tige de liaison (800),
dans lequel la section de liaison (100) présente au moins deux rainures longitudinales (125) ou faces longitudinales (125), dont au moins une est fermée au moins en partie en direction de la face d'extrémité (121) de la section de liaison (100),
avec les étapes de procédé
a) de fourniture d'un semi-produit de foret (107) ou d'une tige (800) avec une surface périphérique (108) sensiblement cylindrique,
b) de premier façonnage (210) des au moins deux rainures longitudinales (125) ou faces longitudinales (125) dans la surface périphérique (108), dans lequel le premier façonnage (210) est effectué en tant que mise en forme par extrusion ou rétrécissement dans une matrice (211 ; 311) et constitue un préfaçonnage pour au moins une des rainures longitudinales (125) ou faces longitudinales (125),
c) de deuxième façonnage (230) de l'au moins une rainure longitudinale (125) ou face longitudinale (125) préfaçonnée,
**caractérisé en ce que**
le deuxième façonnage (230) est effectué en tant que poursuite de façonnage de l'au moins une rainure longitudinale (125) préfaçonnée dans une deuxième matrice réalisée en tant que matrice de fermeture de poursuite de façonnage (235) avec au moins un corps de mise en forme (237) mobile de manière radiale,
dans lequel l'au moins une rainure longitudinale (125) ou face longitudinale préfaçonnée est dimensionnée de telle manière que le matériau refoulé lors de l'étape c) peut être refoulé dans un espace dégagé (126) préfaçonné formé dans le corps de mise en forme (237) et
le volume de l'espace dégagé correspond sensiblement au volume du matériau refoulé lors de l'étape c).

2. Procédé selon la revendication 1, dans lequel le ou les corps de mise en forme (237) radialement mobiles sont guidés dans des évidements de la matrice de fermeture (235).

3. Procédé selon l'une quelconque des revendications précédentes, dans lequel la matrice de fermeture (235) présente un contour tourné vers la section de liaison (100), en particulier dirigé vers l'intérieur, qui est réalisé de manière à correspondre à une rainure longitudinale (129) ou face longitudinale (129) façonnée selon l'étape b) et dans lequel le ou les corps de mise en forme (237) radialement mobiles sont réalisés dans leur zone de mise en forme de manière à correspondre aux rainures de verrouillage (131).

4. Procédé selon l'une quelconque des revendications précédentes, dans lequel le façonnage est effectué lors de l'étape c) en deux étapes de façonnage partiel.

5. Procédé selon l'une quelconque des revendications précédentes, dans lequel la face d'extrémité (121) de la section de liaison (100) est préfaçonnée avant l'étape b), en particulier dans la zone (532) des rainures longitudinales (129) ultérieures.

6. Procédé selon l'une quelconque des revendications précédentes, dans lequel les sections de liaison (100) sont pratiquées par façonnage au niveau des deux extrémités (803 ; 804) d'une tige (800).

7. Procédé selon la revendication 6, dans lequel les rainures longitudinales (614) ou faces longitudinales (614) sont pratiquées par façonnage depuis une extrémité (804) de la tige (800) sur au moins la moitié de la longueur de la tige (800) par extrusion et/ou rétrécissement.

8. Dispositif de production d'une section de liaison (100) en tant que partie d'un outil (101), en particulier d'un foret fixé de manière axialement mobile dans le logement d'outil d'un perforateur, dans lequel la section de liaison (100) présente une face d'extrémité (121) et une surface périphérique (108) sensiblement cylindrique, ou en tant que partie d'une tige (800), comprenant :
- une première matrice (211), au moyen de laquelle au moins une rainure longitudinale (125 ; 129 ; 614) ou face longitudinale (125 ; 129 ; 614) peut être façonnée dans la surface périphérique (108) par extrusion ou rétrécissement, et **caractérisé par**
- une deuxième matrice (235), en tant que matrice de fermeture de poursuite de façonnage avec au moins un corps de mise en forme (237) radialement mobile, au moyen de laquelle au moins une parmi la rainure longitudinale (125 ; 129 ; 614) ou la face longitudinale (125 ; 129 ; 614) préfaçonnée peut être façonnée ultérieurement,
dans lequel un espace dégagé (126) préfaçonné est prévu dans l'au moins un corps de mise en forme (237) mobile de manière radiale, dans lequel du matériau refoulé par l'au moins un corps de mise en forme peut être refoulé,
et ainsi
au moins une rainure longitudinale (125, 129 ; 614) est fermée au moins en partie en direction de la face d'extrémité de la section de liaison (100) et peut être façonnée ou réalisée en tant qu'une rainure de verrouillage (131 ; 615).
